(19) Europäisches Patentamt
European Patent Office
Office européen des brevets

(11) EP 4 167 749 B1

(12) EUROPEAN PATENT SPECIFICATION

(45) Date of publication and mention of the grant of the patent:
**09.07.2025 Bulletin 2025/28**

(21) Application number: **21724710.5**

(22) Date of filing: **14.05.2021**

(51) International Patent Classification (IPC):
***A23F 3/14*** *(2006.01)*

(52) Cooperative Patent Classification (CPC):
(C-Sets available)
**A23F 3/14;** A23L 33/16; A23L 33/165;
A23V 2002/00 (Cont.)

(86) International application number:
**PCT/EP2021/062823**

(87) International publication number:
**WO 2021/254699 (23.12.2021 Gazette 2021/51)**

# (54) IRON FORTIFIED TEA-BASED BEVERAGE

MIT EISEN ANGEREICHERTES TEEBASIERTES GETRÄNK

BOISSON À BASE DE THÉ ENRICHIE EN FER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.06.2020 EP 20181066**

(43) Date of publication of application:
**26.04.2023 Bulletin 2023/17**

(73) Proprietor: **Ekaterra Research and Development UK Limited**
**London EC4Y 0DY (GB)**

(72) Inventors:
- **VAN DER BURG-KOOREVAAR, Monique, Cecilia, Désiré**
  **6708 WH Wageningen (NL)**
- **EILANDER, Jansje, Hannigje, Catharina**
  **6708 WH Wageningen (NL)**
- **VELIKOV, Krassimir, Petkov**
  **6708 WH Wageningen (NL)**

(74) Representative: **Mewburn Ellis LLP**
**Aurora Building**
**Counterslip**
**Bristol BS1 6BX (GB)**

(56) References cited:
**WO-A1-2010/116379**

- **RENÉE I. MELLICAN ET AL: "The Role of Iron and the Factors Affecting Off-Color Development of Polyphenols", JOURNAL OF AGRICULTURAL AND FOOD CHEMISTRY, vol. 51, no. 8, 1 April 2003 (2003-04-01), pages 2304 - 2316, XP055749379, ISSN: 0021-8561, DOI: 10.1021/jf020681c**
- **MCGEE ELISA JUNE TERESA ET AL: "Prevention of iron-polyphenol complex formation by chelation in black tea", LWT- FOOD SCIENCE AND TECHNOLOGY, ACADEMIC PRESS, UNITED KINGDOM, vol. 89, 25 November 2017 (2017-11-25), pages 756 - 762, XP085313174, ISSN: 0023-6438, DOI: 10.1016/J.LWT.2017.11.041**
- **V. DUEIK ET AL: "Iron-Polyphenol Interaction Reduces Iron Bioavailability in Fortified Tea: Competing Complexation to Ensure Iron Bioavailability", JOURNAL OF FOOD QUALITY., vol. 2017, 1 January 2017 (2017-01-01), US, pages 1 - 7, XP055570513, ISSN: 0146-9428, DOI: 10.1155/2017/1805047**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
A23V 2002/00, A23V 2200/048, A23V 2250/0622, A23V 2250/1592, A23V 2250/214

## Description

### TECHNICAL FIELD OF THE INVENTION

The present invention is directed to the provision of healthy and consumer acceptable beverages. In particular, it is directed to tea-based beverages that contain iron but that do not suffer from colour changes or darkening typically associated with the presence of iron in such beverages.

### BACKGROUND TO THE INVENTION

Iron deficiency is common in the population. The CODEX Alimentarius of the World Health Organisation states a Nutrient Reference Value (NRV) of 22mg of iron for diets rich in plant foods (such as those mainly consumed in India). However, more than a sixth of the global population is known to suffer from nutritional iron deficiencies. Anaemia is a common result of iron deficiency.

Fortification of food with iron is one way of providing iron to deficient populations. This is particularly required in countries such as India where the average iron intake is only 50-80% of the recommended dietary intake. Further, in India this iron is only available as non-haem iron as a large section of the population of the country is vegetarian.

Common sources of iron used for fortification of food and beverages include ferrous sulphate, ferrous lactate, ferrous gluconate, ferrous bisglycinate and ferrous citrate. Iron in the soluble form is preferred as non-soluble or slightly soluble iron sources like elemental iron and some ferric salts show poor bioavailability.

Tea is a popular, cheaply available beverage consumed throughout the world. Fortifying tea with iron compounds would therefore be an excellent way of providing iron. However, fortification of tea with a soluble iron source is a well known problem because the polyphenols present in tea complex with iron compounds to form insoluble iron-polyphenol complexes that are dark in colour. These complexes form during the preparation of the tea beverages and the tea liquor produced is darker and has a different colour to non-fortified tea. Such organoleptic changes caused by fortifying teas with iron are not acceptable to consumers and therefore solutions to this problem have been sought previously.

WO10116379 is directed to the problem associated with fortification of tea with an iron salt and notes that addition of any of the commonly available iron salts to tea for the purposes of such iron fortification causes complexation of tea polyphenols with such iron salts which results in discoloration of tea. WO10116379 therefore discloses a dried iron enriched tea provided having 99.5 to 99.88 percent of regular tea, 0.1 to 0.3 percent of iron salt and 0.02 to 0.2 percent of starch base, wherein the iron salt is selected from ferrous bis glycine sulphate and ferric trisglycinate. It will be noted that WO10116379 attempts to address the problem of discoloration of tea using a starch base. It does not employ or disclose any colour correcting components.

IN01402CH2005 claims a method of preparation of a fortificant for food / food supplement characterized in that the fortificant(s) comprises a colour compatible metal amino acid chelate or a colour compatible metal urea complex wherein the fortificant(s) such as the prepared coloured metal amino acid chelate and/or a coloured metal urea complex is/are dissolved in a solution containing a desired amount of a sequestrant followed by an optional addition of an acid, to get a colourless solution which can be dried and mixed with the food/food supplement or sprayed on the food/food supplement and dried, to get a fortified food/food supplement without undergoing any change in its colour.

IN01402CH2005 states that "metal" should be understood as a metal required as a macro or a micro nutrient required by the human body and that "amino acid" should be understood as any amino acid including urea or thio urea, which is considered as an amide of carbonic acid.

IN01402CH2005 lists at least 11 sources that the metal amino acid chelate may be selected from including Calcium, Cobalt, Chromium, Copper, Iron, Magnesium, Manganese, Molybdinum, Potassium, Selenium, Zinc etc. It also lists over 40 different compounds that the sequestrant may be selected from, including Hydroxyethylidene-1,1-diphosphonic acid, Ammonium Polyphosphate, Bone Phosphate, Calcium Citrate, Calcium Dihyrogen Phosphate, Calcium Disodium Ethylenediaminetetraacetate, Calcium Gluconate, Calcium Polyphosphate, Calcium Sulfate, Citric Acid, Dipotassium Hydrogen Phosphate, Disodium Ethylenediaminetetraacetate, Disodium Pyrophosphate, DL-Tartaric acid, Glucone delta-Lactone, Isopropyl Citrate Mixture, L(+) Tartaric Acid, Oxystearin, Pentasodium Triphosphate, Phosphoric Acid, Potassium Dihydrogen Citrate, Potassium Dihydrogen Phosphate, Potassium Polyphosphates, Potassium Sodium L(+)Tartrate, Sodium Diacetate, Sodium Dihydrogen Citrate, Sodium Dihydrogen Phosphate, Sodium Gluconate, Sodium L(+)Tartrate, Sodium Metaphosphate, Sodium Polyphosphate, Sodium Thiosulfate, Sorbitol, Sorbitol syrup, Stearyl Citrate, Tetrasodium Pyrophosphate, Triethyl Citrate, Tripotassium Citrate, Tripotassiurn Phosphate. Trisodium Citrate, Trisodium Phosphate, or a combination thereof.

IN01402CH2005 also mentions that amino acid chelates like "Ferrous Bis Glycinate" have been discovered to be by far the most bio available, least toxic, inert to reaction with food ingredients and bland in taste matching desired organoleptic properties.

Rénee I. Mellican et al, J. Agric. Food Chem., 2003, Vol 5, No. 8, 2304-2316 relates to investigations to examine

the interaction of iron with simple phenolics and polyphenols in order to help understand the role of iron in the off-colour development of foods and beverages. The results showed that low pH, low oxygen, high temperature, and the presence of reducing and chelating agents inhibited off-colour development.

However, as described further below, Ferrous Bisglycinate is not inert to reaction with tea and surprisingly causes an undesired change in the colour of tea-based beverages to which it is added. This is particularly the case when the tea is heated until it actually boils.

The product of the invention is particularly suited for populations such as those in India where, as mentioned, iron is only available as non-haem iron for the large section of the population of the country who are vegetarian. It is also notable that tea brewing in India has specific characteristics including heating the tea until it actually boils. Such brewing is particularly effective at causing the insoluble iron-polyphenol complexes to form and therefore the iron source or sources in such fortified tea are particularly likely to cause colour change and darkening. Therefore, any colour corrector must be particularly effective at preventing the colour change and darkening.

## SUMMARY OF INVENTION

The present inventors have now found that it is possible to provide tea-based beverages fortified using Ferrous Bisglycinate (FeBisglycinate) as an iron source. Although FeBisglycinate typically causes organoleptic issues including an undesirable darkening of the brewed product, particularly when tea brewing involves heating the tea until it actually boils, the inventors have now found that if the FeBisglycinate is provided in combination with $Na_2H_2EDTA$ then the resultant brewed product does not suffer from darkening or other colour changes associated with fortification using FeBisglycinate.

The FeBisglycinate and $Na_2H_2EDTA$ can be incorporated during the process of tea manufacture. They may also be suitably used in leaf-based beverage products, ready to drink formats, water soluble tea powders or granules, or liquid tea beverages.

The tea liquor obtained has good colour and clarity, it is fortified with iron, and it has none of the poor visual and sensory attributes associated with iron fortified teas such as darkening and colour change.

The invention therefore provides a product comprising:

a) a tea component,
b) from 0.03 to 3 wt% by dry weight of FeBisglycinate; and
c) 0.07 to 7 wt% by dry weight of $Na_2H_2EDTA$.

Preferably, the product is a beverage precursor. That is to say, the product comprises a tea component from which a tea-based beverage is prepared. The tea component is preferably tea leaves to be brewed, or tea powder to be dissolved, or tea granules to be dissolved.

Preferably, the tea component is derived from the plant *Camellia sinensis.*

Preferably, the tea component is green tea or black tea.

More preferably, the tea component is black tea.

The tea component may be leaf tea, or tea extract, or tea powder, or tea granules.

Preferably, the tea component is leaf tea.

More preferably, the tea component is black leaf tea.

Preferably the product comprises from 95 to 99.9 wt% by dry weight of the tea component, more preferably from 97 to 99.5 wt%, more preferably still from 98 to 99 wt%, most preferably about 98.5 wt%.

The product comprises from 0.03 to 3 wt% by dry weight of FeBisglycinate, preferably from 0.1 to 1 wt%, more preferably still from 0.2 to 0.5 wt%, most preferably about 0.4 wt%.

The product comprises from 0.07 to 7 wt% by dry weight of $Na_2H_2EDTA$, preferably from 0.2 to 5 wt%, more preferably still from 0.5 to 2 wt%, most preferably about 1 wt%.

Preferably the product comprises a molar ratio of $Na_2H_2EDTA$:FeBisglycinate of from 0.5 : 1 to 4 : 1, more preferably from 0.75 : 1 to 3.5 : 1, more preferably still from 1 : 1 to 3 : 1, yet preferably from 1.5 : 1 to 3 : 1, most preferably about 2 : 1.

## DETAILED DESCRIPTION OF THE INVENTION

### Product

The present invention relates to an iron fortified product comprising a tea component. The product of the invention encompasses ready-to-drink teas including bottled tea-based beverages such as iced tea, leaf-based beverage products, ready to drink formats, water soluble tea powders or granules, or liquid tea beverages.

The invention is particularly directed towards beverage precursor products - that is to say, products in which tea is

provided in a dry format to which water will be added by the consumer. The tea component may therefore be tea leaves to be brewed, or tea powder to be dissolved, or tea granules to be dissolved, or a combination thereof.

**Tea component**

For the purpose of the present invention, "tea" means material from Camellia sinensis var. sinensis and/or Camellia sinensis var. assamica. The term "leaf tea" refers to leaf and/or stem material from the tea plant in an uninfused form (i.e. material which has not been subjected to a solvent extraction step). In other words, the term "leaf tea" refers to the end product of tea manufacture (sometimes referred to as "made tea").

As used herein, the term "black tea" refers to substantially fermented tea, wherein "fermentation" refers to the oxidative and hydrolytic process that tea undergoes when certain endogenous enzymes and substrates are brought together. During the so-called fermentation process, colourless catechins in the leaves and/or stem are converted to a complex mixture of yellow/orange to dark brown polyphenolic substances. For example, black leaf tea can be manufactured from fresh tea material by the steps of withering, maceration, fermentation and drying. A more detailed description of the production of black tea can be found in Chapter 14 of "Tea: Cultivation to consumption" (edited by K.C. Wilson & M.N. Clifford, published in 1992).

The tea component of the present invention may therefore be derived from the plant *Camellia sinensis.* The tea component may be green tea or black tea and it is preferred that the tea component is black tea. The tea component may be leaf tea, or tea extract, or tea powder. It is preferred that the tea component is leaf tea. More preferably, the tea component is black leaf tea.

In order to deliver the organoleptic profile expected of a tea-based beverage, the required levels of polyphenols, or both, the product may comprise from 95 to 99.9 wt% by dry weight of the tea component, more preferably from 97 to 99.5 wt%, more preferably still from 98 to 99 wt%, most preferably about 98.5 wt%.

The product may comprise from 1g to 10g of the tea component per portion, more preferably from 1.25g to 5 g, more preferably still from 1.5g to 4g, most preferably about 2g of the tea component per portion.

As used herein, the term "portion" means the amount of the product required for a single serving. In the case of ready to drink products, a portion will typically be a bottle or can of from 200 to 300 ml. For beverage precursor products (that is to say, products in which tea is provided in a dry format to which water will be added by the consumer), a portion is the amount of the beverage precursor product that is required to make the drink.

**Iron Source**

The product of the invention is fortified with Iron. Specifically, it is fortified with FeBisglycinate.

FeBisglycinate has the CAS number 20150-34-9, formula $C_4H_8FeN_2O_4$, and the following structure:

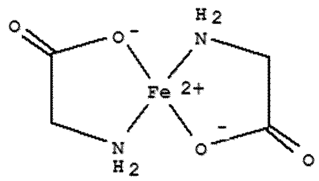

Synonyms of FeBisglycinate include: iron bisglycinate; ferrous bisglycinate, and Bisglycine iron(II) salt.

As stated, thanks to the present invention the product is able to provide high levels of iron fortification without suffering from darkening or colour change. The product comprises from 0.03 to 3 wt% by dry weight of FeBisglycinate, preferably from 0.1 to 1 wt%, more preferably still from 0.2 to 0.5 wt%, most preferably about 0.4 wt% by dry weight of FeBisglycinate.

The product may comprise from 1 to 30 mg FeBisglycinate per portion, more preferably from 2.5 to 20 mg, more preferably still from 5 to 15 mg, most preferably about 10 mg of FeBisglycinate per portion.

The CODEX Alimentarius of the World Health Organisation states a Nutrient Reference Value (NRV) of 22mg of Iron for diets rich in plant foods (such as those mainly consumed in India). Due to the presence of the colour corrector, the product may comprise high levels of iron without suffering darkening or colour change. The product may therefore comprise from 1 to 50 % of the aforementioned NRV of iron per portion, preferably from 2 to 35 %, more preferably from 3 to 20 %, more preferably still from 4 to 10 %, most preferably about 5 % of the NRV of iron per portion.

The product may comprise from 0.05 mg to 10 mg iron per portion, preferably from 0.1 mg to 7.5 mg, more preferably from 0.25 mg to 5 mg, more preferably still from 0.5 mg to 2 mg, most preferably about 1 mg of iron per portion.

For the avoidance of doubt, when iron *per se* is stated as a mass amount it refers to the amount of iron as such in the product portion, not the iron source. For example, 1 mg of iron means 1 mg of the Fe ion, it does not mean 1 mg of

FeBisglysinate.

**Colour Corrector**

The product of the invention employs a colour correcting component to prevent the colour changes that are caused when FeBisglycinate is provided in a tea-based product. The invention employs $Na_2H_2EDTA$ for this purpose.

$Na_2H_2EDTA$ has the CAS number 6381-92-6, the formula $C_{10}H_{14}N_2Na_2O_8$, and the following structure:

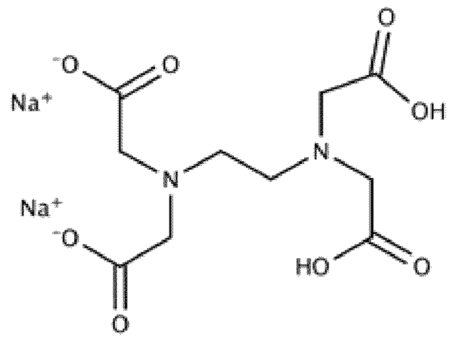

Synonyms of $Na_2H_2EDTA$ include: Disodium dihydrogen ethylenediaminetetraacetate; Ethylenediaminetetraacetic acid disodium salt; Disodium ethylenediaminetetraacetate dihydrate; EDTA disodium salt; EDTA-Na2; Edathamil; Edetate disodium salt dihydrate; and Sequestrene Na2.

The product comprises from 0.07 to 7 wt% by dry weight of $Na_2H_2EDTA$, preferably from 0.2 to 5 wt%, more preferably still from 0.5 to 2 wt%, most preferably about 1 wt% by dry weight of $Na_2H_2EDTA$.

The product may comprise from 5 to 100 mg $Na_2H_2EDTA$ per portion, more preferably from 10 to 60 mg, more preferably still from 15 to 45 mg, most preferably about 35 mg per portion.

**Molar Ratio of Colour Corrector : Iron Source**

The product may comprise a molar ratio of $Na_2H_2EDTA$ : FeBisglycinate of from 0.5 : 1 to 4 : 1, preferably from 0.75 : 1 to 3.5 : 1, more preferably from 1 : 1 to 3 : 1, more preferably still from 1.5 : 1 to 3 : 1, most preferably about 2 : 1.

As set out in the foregoing, the present invention has found that the use of the claimed combination of Iron Source and Colour Corrector is capable of correcting darkening and colour changes associated with iron fortified of tea-based beverages.

**Darkness and Overall Colour Correction Factors**

The colour and darkness of tea-based beverages can be expressed using the coordinates of the CIE 1976 L*a*b* colour space. CIE L*a*b* values can be measured by colourimetry according to the joint ISO/CIE standard (ISO 11664-4:2008(CE); CIE S 014-4/E:2007). Colour is expressed as three values:

- L* for the lightness from black (0) to white (100),
- a* from green (-) to red (+), and
- b* from blue (-) to yellow (+).

Samples can be compared to one another to determine the difference in these values (ΔL*, Δa*, Δb*) and from these values, the total colour difference, Delta E* (ΔE*) can also be calculated.

It will be appreciated that the ΔL* and ΔE* values are of particular interest in the context of the present invention because they may be used to determine the darkness and colour respectively of a normal, un-fortified tea-based beverage and compare that to tea-based beverages containing various Iron Sources and potential Colour Correctors.

The present invention seeks to provide a product that delivers an iron-fortified tea-based beverage that utilises $Na_2H_2EDTA$ to correct the darkness and overall colour changes caused by FeBisglycinate such that the darkness and overall colour is as close as possible to the non-fortified tea-based beverage. This can be represented as "Darkness Correction Factor" (DCF) and Overall Colour Correction Factor" (OCCF) respectively.

DCF is calculated as:

$$DCF = L^*_{sample} - L^*_{blank}$$

- where $L^*_{sample}$ is the L* value of the fortified and colour corrected tea-based beverage obtained from the product according to the present invention; and
- where $L^*_{blank}$ is the L* value of the same tea product with only the tea component and no iron source or colour corrector.

Accordingly, the DCF value is preferably from -5 to 10, more preferably from -4 to 7.5, more preferably still from -3 to 5, yet more preferably from -2 to 4, most preferably from -0.5 to 3.

OCCF is calculated as:

$$OCCF = E^*_{sample} - E^*_{blank}$$

- where $E^*_{sample}$ is the E* value of the fortified and colour corrected tea-based beverage obtained from the product according to the present invention; and
- where $E^*_{blank}$ is the E* value of the same tea product with only the tea component and no iron source or colour corrector.

Accordingly, the OCCF value is preferably from 0 to 15, more preferably from 0 to 10, more preferably still from 0 to 9, yet more preferably from 1 to 8, most preferably from 3 to 7.

Preferably the DCF and OCCF are calculated from the tea-based beverage at 40°C.

As used herein the term "comprising" encompasses the terms "consisting essentially of" and "consisting of". All percentages and ratios contained herein are calculated by weight unless otherwise indicated. It should be noted that in specifying any range of values or amounts, any particular upper value or amount can be associated with any particular lower value or amount.

Except in the operative and comparative examples, all numbers in the description indicating amounts of materials, conditions of reaction, physical properties of materials, and/or use are to be understood as being preceded by the word "about".

The various features of the embodiments of the present invention referred to in individual sections above apply, as appropriate, to other sections mutatis mutandis. Consequently features specified in one section may be combined with features specified in other sections as appropriate. The disclosure of the invention as found herein is to be considered to cover all embodiments as found in the claims as being multiply dependent upon each other. Unless defined otherwise, all technical and scientific terms used herein have the same meaning as commonly understood by one of ordinary skill in the art in the field of tea processing.

The present invention will now be illustrated by reference to the following non-limiting examples.

## EXAMPLES

The impact of FeBisglycinate on the colour of 2 different tea beverages was assessed. The ability of various compounds to correct these colour changes was also tested.

### Materials

Two tea beverages were tested:

- EXAMPLE 1 - Lipton Yellow Label teabags sourced from Poland (purchased from local supermarket, Poland)
- EXAMPLE 2 - Lipton Yellow Label loose tea sourced from KSA (Kingdom of Saudi Arabia), loose tea (purchased from a local supermarket, KSA)

The Iron Source tested was:

- FeBisglycinate (CAS number 20150-34-9); contained 23.2%wt iron (Supplier: Dr. Paul Lohmann GmbH & Co. KGaA, Hauptstrasse 2, 31860 Emmerthal, Germany)

The Potential Colour Correctors tested were:

- Sodium pyrophosphate dibasic (Di-basic NaPP) (CAS number: 7758-16-9)

    o Supplier: Sigma-Aldrich

- Ascorbic Acid (CAS number: 50-81-7)
    - o Supplier: Huijbregts Groep B.V.
- Citric Acid*$H_2O$ (CAS number: 77-92-9)
    - o Supplier: Merck
- $Na_2H_2EDTA*2H_2O$ (CAS Number 6381-92-6)
    - o Supplier: VWR Chemicals, Order Number 20302

**Sample Preparation**

Tea Beverages:

Tea Beverages were prepared as follows:

EXAMPLE 1:

- 1 teabag of the Lipton Yellow Label sourced from Poland was placed in a china mug.
- 200ml of boiled water was added and the teabag was steeped for 2 minutes (timer started when water touched the tea) to provide a tea liquor.
- The teabag was lifted from the tea liquor, allowed to drip for 5 seconds, then removed.
- 6.5g of sugar was added to the tea liquor which was then used for analysis as set out below.

EXAMPLE 2:

- 11g of the of the Lipton Yellow Label sourced from KSA was placed in metal pot, 580ml of boiled water was added to simulate the preparation of approximately 4 servings.
- A lid was placed on the pot and the pot was placed on a stove at a heat sufficient to cause a gentle boil.
- The tea was boiled for 3 minutes (timer was started when water began to boil after addition of tea) without stirring to provide a tea liquor.
- The tea liquor was strained through a sieve to provide 4x 130ml servings of tea liquor.
- 6g of sugar was added to one serving of the tea liquor which was then used for analysis as set out below.

Test combinations:

Test samples were prepared by adding the Iron Source and/or Potential Colour Correctors together with the dry tea in the amounts shown in Tables 1 & 2, following the tea protocols as described above.

Where Potential Colour Correctors were used, they were added in an amount to provide a molar ratio of about 3:1 to about 2:1 of Potential Colour Corrector : Iron from the Iron Source as shown in the Tables.

**Colorimetric Analysis**

Aliquots of 20 ml of each of the tea Samples shown in Tables 1 & 2 were transferred to a quartz cuvette and CIE L*a*b* analysis was performed as follows.

The colours of the samples were measured using a Hunterlab Ultrascan VIS spectrophotometer (wavelength: 360-780 nm). For this work transmitted colour was measured.

The sensor used a plastic integrating sphere that was six inches (152.4 mm) in diameter and coated with Spectraflect™, to diffuse the light from the lamp. The light illuminated the sample and was transmitted through it. A lens was located at an angle of 8° from perpendicular to the sample surface. The lens collected the transmitted light and directed it to a diffraction grating which separated the light into its component wavelengths which were measured by dual diode arrays and converted into data.

The transmission compartment located in the middle of the sensor was used for measuring the transmitted colour of the liquids. The transmission compartment door was closed while standardizing and taking measurements. A transmission cell holder accommodated aliquots in 10mm transmission cells. To install, the transmission cell holder was placed into the transmission compartment at the centre, widest part of the transmission compartment.

The transmission cell provided an optically clear glass cell with a fixed path length of 10 mm. Its dimensions were 55mm x 57mm (width x height). The minimum sample volume for measurement was 20 ml. Measurements were done in total transmission mode (TTRAN). The cell was placed at the sphere opening at the front of the transmission compartment, inside the spectrophotometer.

Measurements

The spectrophotometer was controlled by EasyMatch QC software which performed integration of transmittance values over the visible spectrum to arrive at tristimulus X, Y, and Z values. These values simulate the colour matching response functions of the human observer as defined by the 1931 2° Standard Observer or the 1964 CIE 10° Standard Observer (CIE XYZ).

Instrument Settings

| | |
|---|---|
| Sensor name: | USVIS1666 - Ultrascan VIS |
| ModeType: | TTRAN - Total Transmission |
| Area View: | 1 in. |
| UV filter position: | UVF nominal |

Calculation of ΔE*, and ΔL*

Calculation of ΔE* and ΔL* made use of the L*a*b* values as calculated by the Hunterlab software.
Calculation Δa* and Δb*:

$$\Delta a^* = a^*_{sample} - a^*_{blank}$$

$$\Delta b^* = b^*_{sample} - b^*_{blank}$$

Calculation ΔL*:

$$\Delta L^* = L^*_{sample} - L^*_{blank}$$

ΔL* indicates difference in lightness and darkness (+ ΔL* means sample is lighter than the "blank" sample, - ΔL* means sample is darker than the "blank" sample)
Calculation ΔE*:

$$\Delta E^* = \sqrt{(\Delta L^*)^2 + (\Delta a^*)^2 + (\Delta b^*)^2}$$

Deltas for L* (ΔL*), a* (Δa*) and b* (Δb*) indicate how much a sample and the "blank" sample differ from one another in L*, a* and b*. ΔL*, Δa* and Δb* may be positive (+) or negative (-).
The total colour difference, Delta E* (ΔE*), however, is always positive.

**Table 1 - Example 1 (Poland tea) - Samples and Colorimetric Results**

| Sample Name | Iron Source (amount in mg) | Potential Colour Corrector (amount in mg) | Equivalent Molar Ratio Potential Colour Corrector:Fe [discounting H20 where present in Colour Corrector] | ΔE* @40C | ΔL* @40C |
|---|---|---|---|---|---|
| BLANK | none | none | n/a | 0.0 | 0.0 |
| A.Ex1 | FeBisglycinate (9mg) | None | n/a | 36.7 | -27.2 |

(continued)

| Sample Name | Iron Source (amount in mg) | Potential Colour Corrector (amount in mg) | Equivalent Molar Ratio Potential Colour Corrector:Fe [discounting H20 where present in Colour Corrector] | ΔE* @40C | ΔL* @40C |
|---|---|---|---|---|---|
| B.Ex1 | FeBisglycinate (9mg) | Di-basic NaPP (16.7mg) | 2:1 | 25.1 | -12 |
| C.Ex1 | FeBisglycinate (9mg) | Ascorbic Acid (13.1mg) | 2:1 | 30.0 | -15.7 |
| D.Ex1 | FeBisglycinate (9mg) | Citric Acid*H2O (13.1mg) [citric acid w/o water (12 mg)] | 1.8:1 | 32.2 | -23 |
| | | | | | |
| 1.Ex1 | FeBisglycinate (9mg) | $Na_2H_2EDTA$*2H2O (22.9mg) [Na2H2ED-TA w/o water 20.7mg)] | 1.8:1 | 3.5 | 2.2 |

**Table 2 - Example 2 - (KSA tea) Samples and Colorimetric Results**

| Sample Name | Iron Source (amount in mg) | Potential Colour Corrector (amount in mg) | Equivalent Molar Ratio Potential Colour Corrector:Fe [discounting H20 where present in Colour Corrector] | ΔE* @40C | ΔL* @40C |
|---|---|---|---|---|---|
| BLANK | none | None | n/a | 0.0 | 0.0 |
| A.Ex2 | FeBisglycinate (40.9mg) | None | n/a | 56.1 | -29.4 |
| B.Ex2 | FeBisglycinate (40.9mg) | Di-basic NaPP (75.3mg) | 2:1 | 52.9 | -28.7 |
| C.Ex2 | FeBisglycinate (40.9mg) | Ascorbic Acid (60mg) | 2:1 | 51.8 | -27.8 |
| D.Ex2 | FeBisglycinate (40.9mg) | Citric Acid*H2O (60.3mg) [citric acid w/o H20 (55.15mg)] | 1.8:1 | 57.4 | -30.5 |
| | | | | | |
| 1.Ex2 | FeBisglycinate (26.3mg) | $Na_2H_2EDTA$*2H2O (103.2mg) [Na2-H2EDTA w/o water (93.3mg)] | 2.8:1 | 6.2 | 2.7 |
| 2.Ex2 | FeBisglycinate (40.9mg) | $Na_2H_2EDTA$*2H2O (103.7mg) [Na2-H2EDTA w/o water (93.7mg)] | 1.8:1 | 2.4 | -0.3 |

**Results of Colorimetric Analysis**

The results of the Colorimetric Analysis are provided in the final columns of Tables 1 & 2.

- ΔE* shows the change in colour relative to the respective "blank" sample.
- ΔL* shows whether the tea is showing darkening (negative figure) or lightening (positive figure) compared to the "blank" sample.

Table 1 demonstrates that FeBisglycinate alone (A.Ex1) causes significant colour change (26.7) and darkening (-27.2). Moreover, this colour change and darkening is not corrected by Di-basic NaPP, nor Ascorbic Acid, nor Citric Acid (B.Ex1, C.Ex1, D.Ex1). However, it can be seen that when $Na_2H_2$EDTA is used (1.Ex1) it acts as an excellent colour corrector dramatically reducing the colour change (3.5) and the darkening (2.2) to almost the same as the tea with no Iron Source (BLANK).

Table 2 further demonstrates that $Na_2H_2$EDTA is also effective in a different tea product prepared with a much harsher brewing process. It can be seen that FeBisglycinate alone (A.Ex2) causes significant colour change (56.1) and darkening (-29.4). Moreover, this colour change and darkening is not corrected by Di-basic NaPP, nor Ascorbic Acid, nor Citric Acid (B.Ex2, C.Ex2, D.Ex2). However, it can be seen that when $Na_2H_2$EDTA is used (1.Ex2, 2.Ex2) it acts as an excellent colour corrector dramatically reducing the colour change (6.2, 2.4) and the darkening (2.7, -0.3) to almost the same as the tea with no Iron Source (BLANK).

The inventors have therefore identified the unique ability of the combination of FeBisglycinate and $Na_2H_2$EDTA to provide an iron fortified tea-based beverage that does not suffer from colour change or from darkening. Notably, the use of $Na_2H_2$EDTA is able to prevent colour change or darkening caused by FeBisglycinate even when tea brewing involves heating the tea until it actually boils.

## Claims

**1.** A product comprising:

a) a tea component,
b) from 0.03 to 3 wt% by dry weight of FeBisglycinate; and
c) 0.07 to 7 wt% by dry weight of $Na_2H_2$EDTA.

**2.** A product according to claim 1, wherein the product comprises from 0.1 to 1 wt% by dry weight of FeBisglycinate.

**3.** A product according to claim 1 or 2, wherein the product comprises from 0.2 to 5 wt% by dry weight of $Na_2H_2$EDTA.

**4.** A product according to any of claims 1 to 3, wherein the product is a beverage precursor.

**5.** A product according to any of claims 1 to 4, wherein the tea component is derived from the plant *Camellia sinensis*.

**6.** A product according to any of claims 1 to 5, wherein the tea component is black tea.

**7.** A product according to any of claims 1 to 6, wherein the tea component is leaf tea.

**8.** A product according to any of claims 1 to 7, wherein the product comprises from 95 to 99.9 wt% by dry weight of the tea component.

**9.** A product according to any of claims 1 to 8, wherein the product comprises a molar ratio of $Na_2H_2$EDTA: Fe from FeBisglycinate of from 0.5 : 1 to 4 : 1.

**10.** A product according to claim 9, wherein the product comprises a molar ratio of $Na_2H_2$EDTA: Fe from FeBisglycinate of from 1 : 1 to 3 : 1.

## Patentansprüche

**1.** Produkt, umfassend:

a) eine Teekomponente,
b) 0,03 bis 3 Gew.-%, bezogen auf das Trockengewicht, von Fe-Bisglycinat; und
c) 0,07 bis 7 Gew.-%, bezogen auf das Trockengewicht, von $Na_2H_2$EDTA.

**2.** Produkt nach Anspruch 1, wobei das Produkt 0,1 bis 1 Gew.-%, bezogen auf das Trockengewicht, von Fe-Bisglycinat umfasst.

3. Produkt nach Anspruch 1 oder 2, wobei das Produkt 0,2 bis 5 Gew.-%, bezogen auf das Trockengewicht, von $Na_2H_2EDTA$ umfasst.

4. Produkt nach einem der Ansprüche 1 bis 3, wobei das Produkt ein Getränkevorläufer ist.

5. Produkt nach einem der Ansprüche 1 bis 4, wobei die Teekomponente von der Pflanze Camellia sinensis abgeleitet ist.

6. Produkt nach einem der Ansprüche 1 bis 5, wobei die Teekomponente Schwarztee ist.

7. Produkt nach einem der Ansprüche 1 bis 6, wobei die Teekomponente Blatttee ist.

8. Produkt nach einem der Ansprüche 1 bis 7, wobei das Produkt 95 Gew.-% bis 99,9 Gew.-%, bezogen auf das Trockengewicht, der Teekomponente umfasst.

9. Produkt nach einem der Ansprüche 1 bis 8, wobei das Produkt ein Molverhältnis von $Na_2H_2EDTA$:Fe von Fe-Bisglycinat von 0,5:1 bis 4:1 umfasst.

10. Produkt nach Anspruch 9, wobei das Produkt ein Molverhältnis von $Na_2H_2EDTA$:Fe von Fe-Bisglycinat von 1:1 bis 3:1 umfasst.

**Revendications**

1. Produit, comprenant :

   a) un composant de thé,
   b) de 0,03 à 3 % en poids sec de FeBisglycinate ; et
   c) de 0,07 à 7 % en poids sec de $Na_2H_2EDTA$.

2. Produit selon la revendication 1, dans lequel le produit comprend de 0,1 à 1 % en poids en poids sec de FeBisglycinate.

3. Produit selon la revendication 1 ou 2, dans lequel le produit comprend de 0,2 à 5 % en poids sec de $Na_2H_2EDTA$.

4. Produit selon l'une quelconque des revendications 1 à 3, dans lequel le produit est un précurseur de boisson.

5. Produit selon l'une quelconque des revendications 1 à 4, dans lequel le composant de thé est dérivé de la plante *Camellia sinensis.*

6. Produit selon l'une quelconque des revendications 1 à 5, dans lequel le composant de thé est du thé noir.

7. Procédé selon l'une quelconque des revendications 1 à 6, dans lequel le composant de thé est du thé en feuilles.

8. Produit selon l'une quelconque des revendications 1 à 7, dans lequel le produit comprend de 95 à 99,9 % en poids sec du composant de thé.

9. Produit selon l'une quelconque des revendications 1 à 8, dans lequel le produit comprend un rapport molaire de $Na_2H_2EDTA$: Fe provenant de FeBisglycinate de 0,5:1 à 4:1.

10. Produit selon la revendication 9, dans lequel le produit comprend un rapport molaire de $Na_2H_2EDTA$: Fe provenant de FeBisglycinate de 1:1 à 3:1.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 10116379 A


### Non-patent literature cited in the description


- **RÉNEE I. MELLICAN et al.** *J. Agric. Food Chem.*, 2003, vol. 5 (8), 2304-2316
- Tea: Cultivation to consumption. 1992
- *CHEMICAL ABSTRACTS*, 20150-34-9
- *CHEMICAL ABSTRACTS*, 7758-16-9
- *CHEMICAL ABSTRACTS*, 50-81-7
- *CHEMICAL ABSTRACTS*, 77-92-9
- *CHEMICAL ABSTRACTS*, 6381-92-6